# EUROPEAN PATENT APPLICATION

(11) **EP 4 800 266 A1**
(43) Date of publication of application: **02.09.2026**
(21) Application number: 24882515.0
(22) Date of filing: 25.10.2024
(51) Int. Cl.: F16H 55/06, B62D 5/04, F16H 55/22

(54) **RESIN GEAR**

(30) Priority: 27.10.2023 JP 2023184860; 11.10.2024 JP 2024179219
(71) Applicant: NSK Ltd., Tokyo 141-8560 (JP); NSK Steering & Control, Inc., Tokyo, 141-0032 (JP)
(72) Inventor: HIRAMOTO Takayuki, Fujisawa-shi, Kanagawa 251-8501 (JP); KIYOTA Haruhiko, Maebashi-shi, Gunma 371-8527 (JP); SATO Manabu, Fujisawa-shi, Kanagawa 251-8501 (JP); KUBOTA Akiho, Fujisawa-shi, Kanagawa 251-8501 (JP)
(74) Representative: Grünecker Patent- und Rechtsanwälte PartG mbB
(86) International application number: PCT/JP2024/038175
(87) International publication number: WO 2025/089407

(57) **Abstract**

Provided is a resin gear capable of suppressing the occurrence of damage on a tooth surface, thereby improving durability and prolonging a service life. The resin gear has a tooth part made of a resin material. Fatigue crack development speed da/dN of the resin material is measured in accordance with ASTM E647, and in a case where a crack development speed is represented by a double logarithmic graph given that the vertical axis is a crack development speed and the horizontal axis is a value (ΔK/E) obtained by dividing a stress expansion coefficient range ΔK by a Young's modulus E of the resin material, a fatigue crack development speed da/dN (mm/cycle) calculated by the relational expression in a range of ΔK/E<7 × 10-4[√m] is equal to or less than a value A calculated using formula (3). In formula (3), ΔK is a value obtained using the formula described in ASTM E647.

## Description

### TECHNICAL FIELD

The present invention relates to a resin gear.

### BACKGROUND ART

An electric power steering device incorporated in an automobile uses an electric motor as auxiliary power to assist a steering force of a driver. Since the electric power steering device is to be mounted on a vehicle, there is a high demand for miniaturization, inevitably requiring miniaturization (weight reduction) of the electric motor. However, when the miniaturization of the electric motor is achieved, a torque is insufficient to directly drive a steering shaft by the electric motor, and thus a reduction gear mechanism is incorporated between the electric motor and the steering shaft.

As the reduction gear mechanism, a reduction gear mechanism using a spur gear or other gears is also known, but a worm reduction gear mechanism including a worm gear and a worm wheel meshing with the worm gear is generally used for the reason that a large reduction ratio can be obtained by a single set.

Incidentally, one of damage forms of the worm wheel is tooth surface damage. This damage progresses due to occurrence of repeated pitting on a tooth surface. When a shape of the tooth portion changes due to the pitting, backlash is increased, and problems such as rattling noise occur.

Therefore, Patent Literature 1 proposes a gear including a thermoplastic resin and cellulose nanofibers having an average fiber diameter of 1,000 nm or less for the purpose of improving gear durability and quietness. In addition, Patent Literature 2 discloses a resin gear in which a gear portion is not likely to be worn or damaged. In the resin gear disclosed in Patent Literature 2, grease containing wax that exhibits an effective lubricating effect during high-temperature operation is used between a driven gear (worm wheel) and a drive gear (worm), and a resin portion is formed of a polyamide resin containing glass fibers.

Further, Patent Literature 3 discloses a gear for an electric power steering device for the purpose of improving wear resistance. The gear for an electric power steering device is formed of a polyamide resin composition containing polyamide 66 having a number average molecular weight in a predetermined range and glass fibers having an average fiber diameter in a predetermined range.

### CITATION LIST

### PATENT LITERATURE

Patent Literature 1: JP2020-108958A
Patent Literature 2: WO2004/083015
Patent Literature 3: JP2013-155788A

### SUMMARY OF INVENTION

### TECHNICAL PROBLEM

Incidentally, Patent Literature 1 discloses that a number average molecular weight (Mn) of the thermoplastic resin used in the gear is 10,000 to 150,000, and is preferably 30,000 to 80,000 from the viewpoint of durability and moldability. However, a preferable range of the molecular weight is very wide, and a most appropriate molecular weight has not been studied for each of various thermoplastic resins described in Patent Literature 1.

In the resin gear disclosed in Patent Literature 2, a diameter of glass fibers blended in a resin material is reduced to 6 µm to 8 µm to improve durability of the material. Further, in Patent Literature 3, the wear resistance is improved by defining a content and the average fiber diameter of the glass fibers contained in the polyamide resin composition.

However, even with these techniques in the related art, it is difficult to obtain sufficient durability. In addition, in these techniques in the related art, a type and molecular weight of the resin and a type and shape of the reinforcing fiber are appropriately combined, but the number of combinations is enormous, and it is difficult to find an optimal combination, and thus there is a concern about excess or deficiency in performance. Further, in recent years, since a weight of the vehicle has increased due to an increase in the number of components and electrification of various devices for the purpose of improving functions of an automobile, a rack propulsive force required for steering has been increased, and a load on the worm wheel has also been increased. Therefore, a product having more excellent durability is required.

The present invention has been made in view of the above problems, and an object of the present invention is to provide a resin gear capable of preventing occurrence of damage on a tooth surface, thereby improving durability and extending the service life.

### SOLUTION TO PROBLEM

A resin gear according to the present invention has a configuration of the following [1].
[1] A resin gear having a tooth portion formed of a resin material, in which
   in a case where a fatigue crack growth rate da/dN of the resin material is measured in accordance with ASTM E647, and the crack growth rate is represented by a log-log graph when a vertical axis represents the crack growth rate, and a horizontal axis represents a value (ΔK/E) obtained by dividing a stress intensity factor range ΔK by a Young's modulus E of the resin material,
   in a range of ΔK/E < 7×10⁻⁴ [√m], the fatigue crack growth rate da/dN (mm/cycle) calculated by the relational expression is equal to or less than a value A calculated by the following formula (3),
      [Math. 1] $A = 6.00 \times {10}^{22} \times {\left(ΔK/E\right)}^{8.30}$
   in the formula (3), ΔK represents a value calculated by the following formula (2), and α, ΔP, B, W, a, N, Pₘₐₓ, and Pₘᵢₙ are as follows,
      [Math. 2] $ΔK = \frac{ΔP}{B \sqrt{w}} \times \frac{\left(2+α\right)}{{\left(1-α\right)}^{\frac{3}{2}}} \times \left(0.886+4.64α-13.32{α}^{2}+14.72{α}^{3}-5.6{α}^{4}\right)$ $α = a / W$ $ΔP = {P}_{max} - {P}_{min}$
      B: thickness of test piece (mm)
      W: width of test piece (mm)
      a: crack length (mm)
      Pₘₐₓ: maximum load (N)
      Pₘᵢₙ: minimum load (N)
      N: number of repetitions (cycles).
   Preferred embodiments of the resin gear according to the present invention are as configurations of the following [2] to [4].
[2] The resin gear according to [1], in which
   the resin gear is used as a worm wheel of a steering device.
[3] The resin gear according to [1] or [2], in which
   a base material of the resin material is polyamide 66, and
   a number average molecular weight of the polyamide 66 is 30,000 or more and 60,000 or less.
[4] The resin gear according to any of [1] to [3], in which
   the resin material contains glass fibers, and
   an average fiber diameter of the glass fibers is 6 µm or more and 8 µm or less.

### ADVANTAGEOUS EFFECTS OF INVENTION

According to the present invention, since a resin material having a crack growth rate controlled within a predetermined range is used as a resin material constituting a tooth portion, it is possible to provide a resin gear capable of preventing occurrence of damage on a tooth surface, thereby improving durability and extending the service life.

### BRIEF DESCRIPTION OF DRAWINGS

FIG. 1 is a schematic configuration diagram illustrating an electric power steering device to which a resin gear according to Embodiment 1 and Embodiment 2 of the present invention is applied.
FIG. 2 is a partial sectional view illustrating a reduction gear mechanism of the electric power steering device illustrated in FIG. 1.
FIG. 3 is a perspective view illustrating a worm gear and a worm wheel, which are taken out, constituting the reduction gear mechanism.
FIG. 4 is a schematic view illustrating a method for molding a plate material for preparing a test piece in Test 1 and Test 2.
FIG. 5 is a plan view illustrating an example of a shape and a size of the test piece in Test 1 and Test 2.
FIG. 6 is a schematic view illustrating a position at which the test piece is collected from the plate material in Test 1 and Test 2.
FIG. 7 is a plan view illustrating specific sizes of the test piece in Test 1 and Test 2.
FIG. 8 is a diagram illustrating results of Test 1, and is a graph illustrating measurement results of a crack growth rate when a vertical axis represents the crack growth rate and a horizontal axis represents a stress intensity factor range ΔK.
FIG. 9 is a diagram illustrating results of Test 1, and is a graph illustrating durability test results of Inventive Example 1 and Comparative Example 1 when the vertical axis represents a tooth thickness reduction amount and the horizontal axis represents the number of durability cycles.
FIG. 10 is a diagram illustrating results of Test 2, and is a graph illustrating measurement results of the crack growth rate when the vertical axis represents the crack growth rate and the horizontal axis represents a value (ΔK/E) obtained by dividing the stress intensity factor range ΔK by the Young's modulus E of a resin material.
FIG. 11 is a schematic view illustrating a device configuration for performing a ball-on-disk wear test of Test 2.
FIG. 12 is a graph illustrating results of the ball-on-disk wear test of Test 2.

### DESCRIPTION OF EMBODIMENTS

As a result of intensive studies to solve the above problems, the present inventors have found that pitting of a resin material is dominant in tooth surface damage of a worm wheel, and it is effective to prevent the pitting by controlling the crack growth rate of the resin material constituting the tooth portion. That is, by using a resin material having a crack growth rate controlled within a predetermined range as a material of the tooth portion, it is possible to prevent the tooth surface damage and improve durability of a gear. The present invention has been made based on these findings.

Hereinafter, an embodiment of the present invention will be described in detail. The following embodiment is an example in which a resin gear is used as a worm wheel of an electric power steering device. The present invention is not limited to the embodiment described below.

### <<Embodiment 1>>

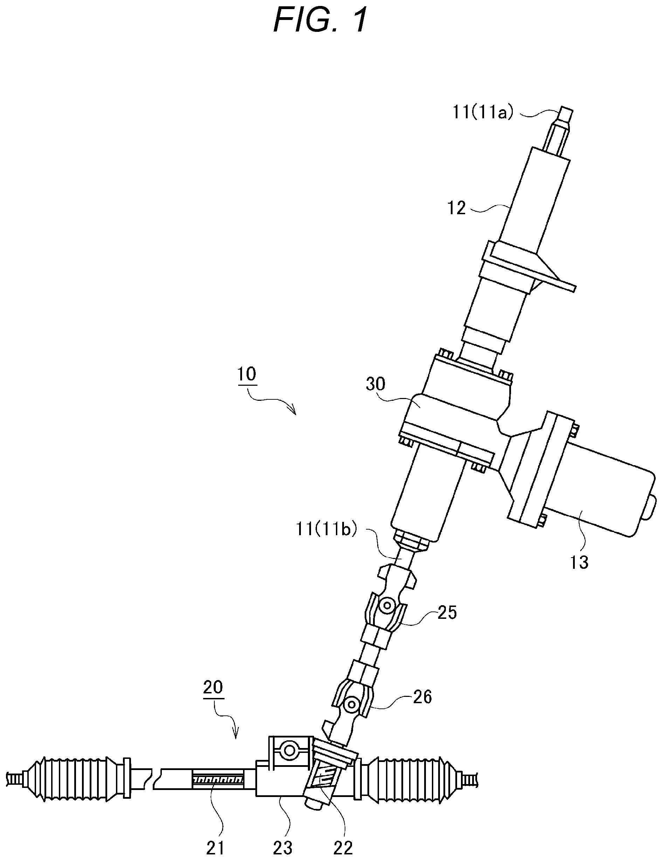

First, Embodiment 1 will be described. FIG. 1 is a schematic configuration diagram illustrating an electric power steering device to which a resin gear according to the present Embodiment 1 is applied. In an electric power steering device 10, a steering shaft 11 includes an upper steering shaft (hereinafter, referred to as "upper shaft 11a") and a lower steering shaft (hereinafter, referred to as "lower shaft 11b"). The steering shaft 11 is supported inside a column housing 12 so as to be rotatable around an axis, and the column housing 12 is fixed at a predetermined position inside a vehicle cabin in a state in which a lower portion of the column housing 12 is inclined toward the front of a vehicle. A steering wheel (not illustrated) is fixed to an upper end of the upper shaft 11a.

A steering torque generated in the upper shaft 11a and the lower shaft 11b by a steering wheel operation of a driver is detected by a torque sensor (not illustrated), and an output of the electric motor 13 is controlled based on a detected steering torque signal. Rotation of the electric motor 13 is transmitted to the lower shaft 11b via a reduction gear mechanism 30. The steering shaft 11 is connected to a rack-and-pinion motion conversion mechanism 20 via universal joints 25 and 26.

The rack-and-pinion motion conversion mechanism 20 is disposed substantially horizontally in an engine room at the front of the vehicle with a longitudinal direction as a left-right direction of the vehicle, and includes a rack shaft 21 that is movable in an axial direction, a pinion shaft 22, and a tubular rack shaft case 23 that supports the rack shaft 21 and the pinion shaft 22. The pinion shaft 22 is supported obliquely with respect to a shaft center of the rack shaft 21, and includes a pinion having a tooth portion that meshes with a tooth portion of the rack shaft 21.

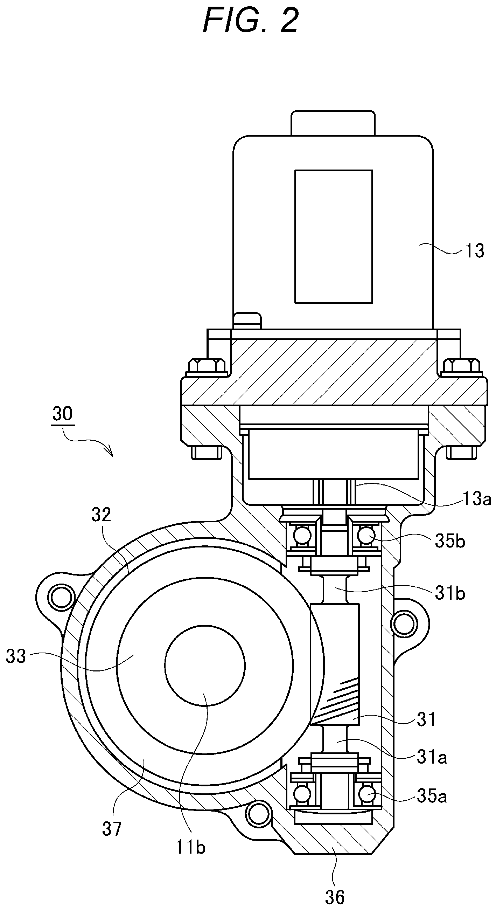

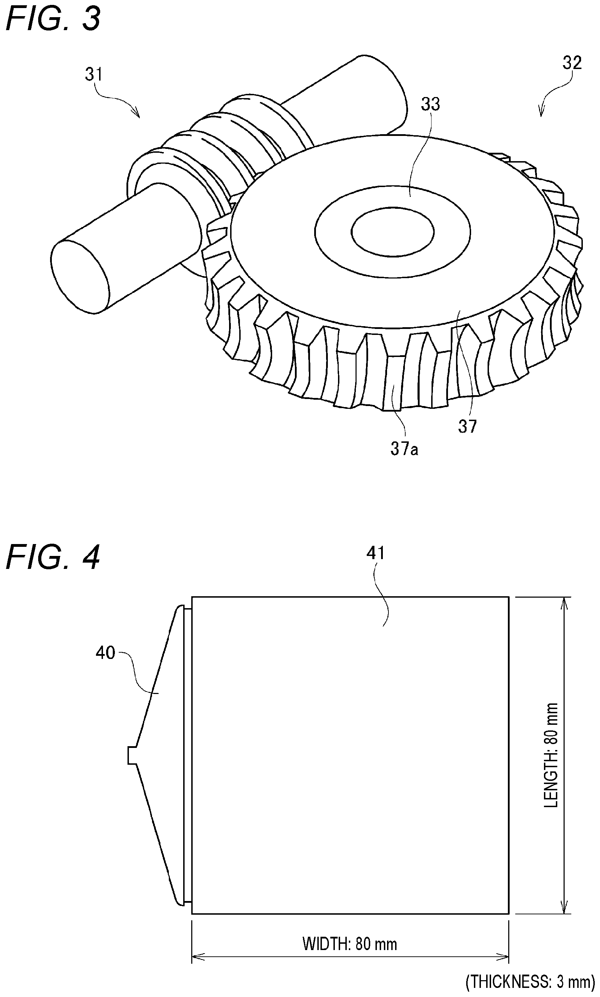

FIG. 2 is a partial sectional view illustrating a reduction gear mechanism 30 of the electric power steering device 10 illustrated in FIG. 1. In addition, FIG. 3 is a perspective view illustrating a worm gear 31 and a worm wheel 32, which are taken out, constituting the reduction gear mechanism 30. FIG. 3 illustrates a state in which the worm wheel 32 meshes with the worm gear 31.

As illustrated in FIG. 2, the worm gear 31 is made of, for example, metal, and worm shafts 31a and 31b are integrally formed at both ends thereof. The worm shaft 31b on a side closer to the electric motor 13 is spline-coupled or serration-coupled to a drive shaft 13a of the electric motor 13, thereby being caused to rotate integrally with the drive shaft 13a of the electric motor 13. The worm shafts 31a and 31b are supported on a gear case 36 in a rotatable manner by bearings 35a and 35b.

As illustrated in detail in FIG. 3, the worm wheel 32 includes a metal core member 33 and a resin gear tooth portion 37 provided on an outer side of the core member 33 in a radial direction. Gear teeth 37a meshing with the worm gear 31 are formed on an outer periphery surface of the gear tooth portion 37 in the radial direction. In the present embodiment, the gear tooth portion 37 is formed of a resin material in which a fatigue crack growth rate da/dN is appropriately selected.

The resin material constituting the gear tooth portion 37 will be described in detail below. In the present embodiment, in a case where the fatigue crack growth rate da/dN is measured in accordance with ASTM E647, the crack growth rate is represented by a log-log graph when a vertical axis represents the crack growth rate, and a horizontal axis represents a stress intensity factor range ΔK, and a relational expression is derived by the Paris's law, a resin material in which the fatigue crack growth rate da/dN (mm/cycle) calculated by the relational expression is equal to or less than a value A calculated by the following formula (1) in any ΔK is used.
[Math. 3] $A = 6.77 \times {10}^{- 9} \times {\left(ΔK\right)}^{7.11}$

In the formula (1), ΔK represents a value calculated by the following formula (2), and α, ΔP, B, W, a, N, Pₘₐₓ, and Pₘᵢₙ are as follows.
[Math. 4] $ΔK = \frac{ΔP}{B \sqrt{w}} \times \frac{\left(2+α\right)}{{\left(1-α\right)}^{\frac{3}{2}}} \times \left(0.886+4.64α-13.32{α}^{2}+14.72{α}^{3}-5.6{α}^{4}\right)$
$α = a / W$ $ΔP = {P}_{max} - {P}_{min}$
B: thickness of test piece (mm)
W: width of test piece (mm)
a: crack length (mm)
N: number of repetitions (cycles)
Pₘₐₓ: maximum load (N)
Pₘᵢₙ: minimum load (N)

When a resin material is used in which the fatigue crack growth rate da/dN (mm/cycle) calculated by the relational expression derived by the Paris's law exceeds the value A calculated by the formula (1) in any ΔK, durability of the worm wheel 32 is reduced. In the present Embodiment 1, since the gear tooth portion 37 is formed of a resin material in which the crack growth rate is equal to or less than the value A calculated by the formula (1), growth of pitting is sufficiently prevented, and the durability of the worm wheel 32 can be improved.

### [Resin Material]

As a base material of the resin material constituting the gear tooth portion 37, a thermoplastic resin is preferably used, and the resin material further preferably contains a reinforcing fiber.

### <Thermoplastic Resin>

Specific examples of the thermoplastic resin include polyamide resins, polyester resins, polyacetal resins, polycarbonate resins, polyacrylic resins, polyphenylene ether resins, polyarylate resins, polysulfone resins, polyphenylene sulfide resins, polyether sulfone resins, polyketone resins, polyphenylene ether ketone resins, and polyamideimide resins. Among these thermoplastic resins, from the viewpoint of heat resistance, moldability, and mechanical strength, a polyamide resin is preferably used, and in particular, polyamide 66 (PA66) is more preferably used.

### (Number Average Molecular Weight Mn of Thermoplastic Resin)

A number average molecular weight Mn of the thermoplastic resin used as the resin material is preferably high in order to improve the durability. Therefore, the number average molecular weight Mn of the thermoplastic resin is preferably 30,000 or more, and more preferably 32,000 or more.

On the other hand, when the number average molecular weight Mn of the thermoplastic resin is too large, a melt viscosity of the resin material becomes too high at the time of molding the gear tooth portion, and thus the moldability is reduced. In addition, when the resin material contains a reinforcing fiber, breakage or dispersion failure of the fiber occurs during compounding or molding of the material due to an influence of a high melt viscosity. As a result, the durability and mechanical properties of the worm wheel may be reduced. Therefore, the number average molecular weight Mn of the thermoplastic resin is preferably 60,000 or less. In particular, when the resin material contains a reinforcing fiber, the number average molecular weight Mn of the thermoplastic resin is more preferably 50,000 or less, and further preferably 38,000 or less.

In the present embodiment, a method and conditions for measuring the number average molecular weight Mn of the thermoplastic resin are as follows.
·Measurement method: gel permeation chromatography (GPC)
·Eluent: hexafluoroisopropanol (HEIP)
·Standard material: polymethyl methacrylate (PMMA)
·Injection amount: 10 µL
·Flow rate: 0.3 mL/min
·Sample concentration: 1 mg/mL in terms of resin content
·Column temperature: 45°C

### <Reinforcing Fiber>

The resin material constituting the gear tooth portion 37 more preferably contains a reinforcing fiber. When the resin material contains the reinforcing fiber, the mechanical strength of the gear tooth portion 37 can be improved. Examples of the reinforcing fiber include glass fibers, carbon fibers, aramid fibers, and whiskers of potassium titanate, silicon carbide, or the like. Among these reinforcing fibers, glass fibers are more preferably used in view of a balance between a cost and a reinforcing effect. Further, the reinforcing fiber is not limited to one type, and the resin material may contain a plurality of types of reinforcing fibers.

### (Average Fiber Diameter of Reinforcing Fiber)

When the resin material contains a reinforcing fiber, an average fiber diameter of the reinforcing fiber is preferably as small as possible. When a content of the reinforcing fiber with respect to a total mass of the resin material is constant, as the average fiber diameter of the reinforcing fiber is smaller, the number of the reinforcing fiber is increased, and an area where the reinforcing fiber and a resin are bonded is increased, so that a high reinforcing effect can be obtained. Therefore, the average fiber diameter of the reinforcing fiber is preferably 8 µm or less. However, when the average fiber diameter of the reinforcing fiber is too small, the reinforcing fiber is easily broken during the compounding or molding of the material, and the reinforcing effect is difficult to be sufficiently obtained, and thus the average fiber diameter of the reinforcing fiber is preferably 6 µm or more.

The average fiber diameter of the reinforcing fiber can be obtained by, for example, measuring fiber diameters of any 100 reinforcing fibers by observation using a scanning electron microscope (SEM) and calculating an average thereof.

### (Content of Reinforcing Fiber)

When the content of the reinforcing fiber in the resin material is too small, the reinforcing effect is poor, and the mechanical strength of the worm wheel may be insufficient. Therefore, the content of the reinforcing fiber in the resin material is preferably 15 mass% or more, and more preferably 20 mass% or more with respect to the total mass of the resin material. On the other hand, when the content of the reinforcing fiber in the resin material is too large, there is a possibility that fluidity of the material is reduced and the moldability is reduced, or the durability becomes insufficient due to a reduction in toughness. Therefore, the content of the reinforcing fiber in the resin material is preferably 35 mass% or less, and more preferably 30 mass% or less with respect to the total mass of the resin material.

### <Other Components>

The resin material may contain, as other components of the thermoplastic resin and the reinforcing fiber, at least one of an iodide heat stabilizer, a phenol-based antioxidant, and an amine-based antioxidant in order to prevent deterioration due to heat during molding and use.

In the above-described embodiment, an example in which the resin gear is used as the worm wheel of the steering device has been described, but the present invention is not limited thereto, and the resin gear according to the present invention can be used in various other devices.

### [Method for Manufacturing Resin Gear]

In the present invention, a method for manufacturing the resin gear is not particularly limited as long as the resin material constituting the tooth portion is selected as described above. As an example of the method for manufacturing the resin gear, a method for manufacturing a worm wheel will be described below with reference to FIG. 3.

The worm wheel 32 is obtained by insert molding in which the metal core member 33 is inserted into a mold and then a resin composition for forming the above resin material is injected. A molded product obtained by injection molding may be subjected to machining for the purpose of improving meshing with the worm gear 31 and a contact state. However, if a surface roughness of the worm wheel 32 becomes too large due to the machining, there is a concern that the quietness and the durability may be reduced. Therefore, even in the case of machining, the surface roughness is preferably as small as possible. For example, an arithmetic average roughness (Ra) of a surface of the gear teeth 37a is preferably 3.2 µm or less.

The metal core member 33 is also not particularly limited, but carbon steel, aluminum or an aluminum alloy, or magnesium or a magnesium alloy is preferably used from the viewpoint of mechanical strength. In addition, in order to prevent the gear tooth portion 37 from coming off the core member 33 or idling during use, it is desirable to perform knurling on the core member 33 or the like to obtain a shape that can obtain an anchor effect. Instead of performing knurling on the core member 33, the core member 33 and the gear tooth portion 37 may be fixed by an adhesive.

Hereinafter, the resin gear according to Embodiment 1 will be described in more detail with reference to Test 1.

### [Test 1]

### 1. Measurement of Crack Growth Rate

### (Preparation of Test Piece Formed of Resin Material)

A resin composition obtained by mixing polyamide 66 having a number average molecular weight Mn of 35,000 and glass fibers having an average fiber diameter of 6 µm was prepared and molded by injection molding to prepare a test piece of Inventive Example 1 formed of a resin material. In addition, a resin composition obtained by mixing polyamide 66 having a number average molecular weight Mn of 26,000 and glass fibers having an average fiber diameter of 6 µm was prepared and molded by injection molding to prepare a test piece of Comparative Example 1 formed of a resin material. In each test piece, a content of the polyamide 66 was 75 mass% and a content of the glass fiber was 25 mass% with respect to a total mass of the resin composition.

FIG. 4 is a schematic view illustrating a method for molding a plate material for preparing a test piece. As illustrated in FIG. 4, first, a plate material 41 having a thickness of 3 mm, a width of 80 mm, and a length of 80 mm was molded by injection molding using a fan gate 40 as a mold such that an orientation of a glass fiber in the plate material was as uniform as possible.

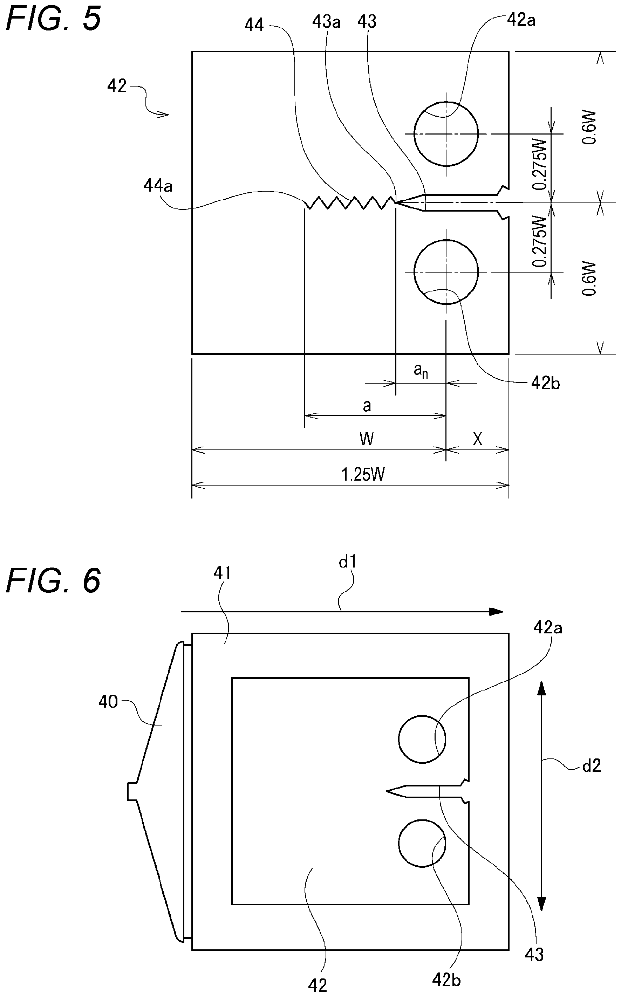

FIG. 5 is a plan view illustrating an example of a shape and a size of the test piece. FIG. 6 is a schematic view illustrating a position at which the test piece is collected from the plate material. As illustrated in FIG. 5, in the present example, a compact test piece (CT test piece) having a shape conforming to ASTM E647 was used. In a test piece 42, a notch 43 extending inward from a center of one side thereof is formed, and circular holes 42a and 42b are provided on both sides of the notch 43. Then, a crack growth rate is measured by measuring a length of a crack formed in a direction in which the notch 43 extends from a tip of the notch 43 when the two holes 42a and 42b are pulled in directions away from each other.

In a compact test piece described in ASTM E647, W represents a length (test piece width) from a center of the hole 42a or 42b to a side opposite to a side on which the notch 43 was formed. In addition, aₙ represents a length (notch length) from a tip 43a of the notch 43 to a line connecting the center of the hole 42a and the center of the hole 42b, and a represents a length (crack length) from a tip 44a of a crack 44 to the line connecting the center of the hole 42a and the center of the hole 42b.

As illustrated in FIG. 6, when the plate material 41 is molded using the fan gate 40, the resin composition flows in a direction indicated by an arrow d1, and the glass fibers are oriented in substantially the same direction as the flowing direction. Therefore, when a load is applied to the two holes 42a and 42b in a direction in which the holes 42a and 42b are separated from each other, that is, in a direction indicated by an arrow d2, the crack is likely to grow. In the present embodiment, a position at which the test piece 42 is collected from the plate material 41 is set so as to obtain a condition in which the crack is most likely to occur.

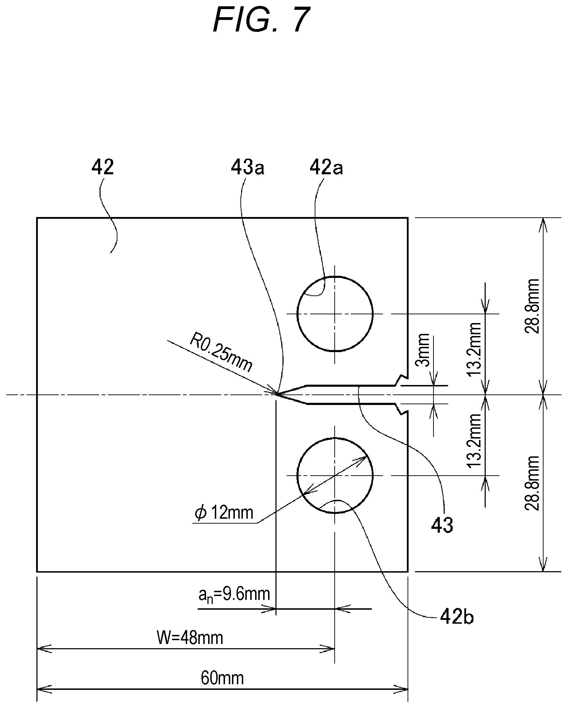

FIG. 7 is a plan view illustrating specific sizes of the test piece. As illustrated in FIG. 7, in the test pieces of Inventive Example 1 and Comparative Example 1, the test piece width W was 48 mm, the notch length aₙ was 9.6 mm, diameters of the holes 42a and 42b were 12 mm, and a distance from the centers of the holes 42a and 42b to the notch 43 was 13.2 mm. In addition, distances from end surfaces of the test piece on both sides of the notch 43 to the notch 43 were set to 28.8 mm, a distance from the side on which the notch 43 was formed to the opposite side was set to 60 mm, a width of the notch 43 was set to 3 mm, and the tip 43a of the notch 43 was subjected to R processing having a diameter of 0.25 mm. Further, a crack of 0.5 mm was introduced into the tip 43a of the notch 43 with a razor.

### (Measurement of Crack Growth Rate)

Crack growth rates were measured for the test pieces 42 of Inventive Example 1 and Comparative Example 1 obtained as described above. The crack growth rates were measured using an 8802 type hydraulic servo testing system manufactured by Instron. The crack length a was measured by a compliance method using a clip gauge (model 2670-120) manufactured by Instron. Specifically, the test piece 42 was attached to a measurement jig by passing a pin through the holes 42a and 42b of the test piece 42, and a load was repeatedly applied in a direction in which the hole 42a and the hole 42b were separated in a servo test system.

Test conditions were as follows.
Frequency: 10 Hz, sine wave
Stress ratio (R): 0.1
Load range (ΔP): constant
Temperature: room temperature
Inventive Example 1: maximum load (Pₘₐₓ) of 460 N, minimum load (Pₘᵢₙ) of 46 N
Comparative Example 1: maximum load (Pₘₐₓ) of 360 N, minimum load (Pₘᵢₙ) of 36 N

The reason why load conditions were different between Inventive Example 1 and Comparative Example 1 is that in a sample of Inventive Example 1, the crack did not grow under the condition of Pₘₐₓ of 360 N and Pₘᵢₙ of 36 N.

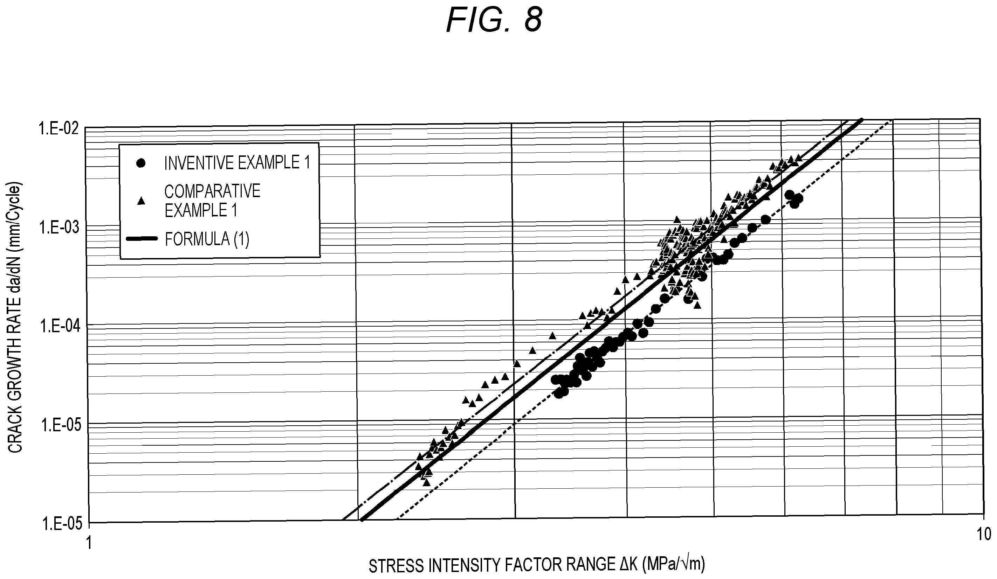

FIG. 8 is a graph illustrating the crack growth rates of Inventive Example 1 and Comparative Example 1 by a log-log graph with the vertical axis representing the crack growth rate and the horizontal axis representing the stress intensity factor range ΔK. Based on these results, a relational expression was derived according to the Paris's law as follows. FIG. 8 shows only measurement results of a linear region in which the Paris's law is satisfied, that is, only data to be linearly approximated by the Paris's law, and relational expressions shown below are approximate expressions of the crack growth rate of the test pieces illustrated in FIG. 8.

### Inventive Example 1:

$da / dN = 3.39 \times {10}^{- 9} \times {\left(ΔK\right)}^{7.19}$

### Comparative Example 1:

$da / dN = 10.21 \times {10}^{- 9} \times {\left(ΔK\right)}^{7.02}$

The formula (1) defined in the present invention is indicated by a thick solid line in FIG. 8. In FIG. 8, the value A obtained by the formula (1) is shown in the vertical axis.
[Math. 7] $A = 6.77 \times {10}^{- 9} \times {\left(ΔK\right)}^{7.11}$

In the formula (1), ΔK represents a value calculated by the following formula (2), and α, ΔP, B, W, a, N, Pₘₐₓ, and Pₘᵢₙ are as follows.
[Math. 8] $ΔK = \frac{ΔP}{B \sqrt{w}} \times \frac{\left(2+α\right)}{{\left(1-α\right)}^{\frac{3}{2}}} \times \left(0.886+4.64α-13.32{α}^{2}+14.72{α}^{3}-5.6{α}^{4}\right)$
$α = a / W$ $ΔP = {P}_{max} - {P}_{min}$
B: thickness of test piece: 3 mm
W: width of test piece: 48 mm
a: crack length (mm)
N: number of repetitions (cycles)
Inventive Example 1: maximum load Pₘₐₓ of 460 N, minimum load Pₘᵢₙ of 46 N
Comparative Example 1: maximum load Pₘₐₓ of 360 N, minimum load Pₘᵢₙ of 36 N

As illustrated in FIG. 8, when the approximate expression obtained by measurement in Inventive Example 1 was compared with a straight line represented by the formula (1), the crack growth rate of Inventive Example 1 was a value smaller than the value A in any ΔK. On the other hand, when the approximate expression obtained by measurement in Comparative Example 1 was compared with the straight line represented by the formula (1), the crack growth rate of Comparative Example 1 was a value larger than the value A at least in a part of ΔK.

### 2. Durability Test of Worm Wheel

### (Preparation of Worm Wheel and Worm)

In order to prepare worm wheels of Inventive Example 1 and Comparative Example 1, resin compositions similar to those for the test pieces of the above crack growth rate were prepared, respectively. Next, the worm wheels of Inventive Example 1 and Comparative Example 1 were prepared by insert molding in which the resin compositions were injected into a mold in a state in which a metal core member was disposed in the mold. A dimension of each worm wheel was adjusted by machining in order to improve meshing with a worm. In addition, a worm material made of steel was prepared, subjected to heat treatment to be cured, and then ground to prepare a worm.

### (Durability Test of Worm Wheel)

Thereafter, a durability test of the worm wheel was performed by combining each of the obtained worm wheels and the worm. In the durability test, the worm wheel was caused to rotate in a predetermined direction so as to generate a torque of 100 N·m on a worm wheel shaft, and then the worm wheel was caused to rotate with an operation of causing the worm wheel to rotate reversely as one cycle so as to generate the same torque. A reduction amount of a tooth thickness due to tooth surface damage was calculated after each operation of a predetermined number of cycles was performed. A tester used was provided with a mechanism for applying an elastic force to the worm to displace the worm toward a worm wheel side in order to eliminate backlash accompanying a reduction in the tooth surface, and the reduction amount of the tooth thickness was calculated based on a displacement amount. Grease was disposed between the worm and the worm wheel to ensure lubricity.

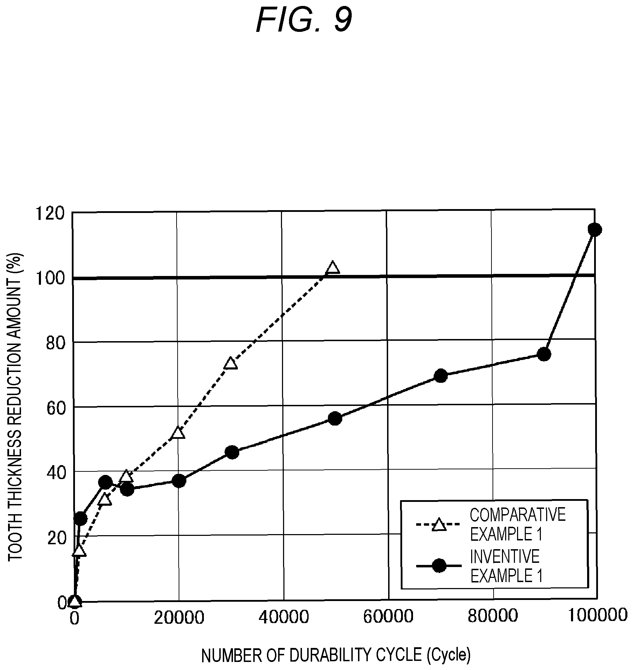

FIG. 9 is a graph illustrating durability test results of Inventive Example 1 and Comparative Example 1 when the vertical axis represents a tooth thickness reduction amount and the horizontal axis represents the number of durability cycles. The tooth thickness reduction amount is expressed as a ratio in a case where the tooth thickness reduction amount at the time when the worm wheel of Comparative Example 1 reaches a use limit is 100%.

The crack growth rate obtained by using the approximate expression derived from the test piece of Inventive Example 1 formed of the resin material was equal to or less than the value A calculated by the formula (1) indicated by the thick solid line in FIG. 8 in any ΔK, and thus a result that pitting was prevented was obtained. Specifically, as illustrated in FIG. 9, in the worm wheel of Inventive Example 1, since the tooth thickness reduction amount was about 80% even after an operation of 90,000 cycles was performed, the tooth surface damage was prevented, and the durability was improved.

On the other hand, since the crack growth rate obtained by using the approximate expression derived from the test piece of Comparative Example 1 formed of the resin material exceeded the value A calculated by the formula (1) indicated by the thick solid line in FIG. 8 at least in a part of ΔK, the crack growth rate reached the use limit at a stage where an operation of 50,000 cycles was performed, so that the durability was significantly lower than that of the inventive example.

### <<Embodiment 2>>

Next, Embodiment 2 will be described. In the present Embodiment 2, the Young's modulus E of the resin material constituting the gear tooth portion 37 is further considered with respect to the case described in Embodiment 1. Therefore, respective configurations of the electric power steering device, the reduction gear mechanism, the worm gear, and the worm wheel, and manufacturing methods thereof are the same as those of Embodiment 1, and detailed descriptions thereof will be omitted here. In addition, a composition of the resin material constituting the gear tooth portion 37 is the same as that of Embodiment 1.

The present inventors have found that in a case where the fatigue crack growth rate da/dN of the resin material is measured in accordance with ASTM E647 by dividing the stress intensity factor range ΔK obtained in Embodiment 1 by the Young's modulus E of the resin material constituting the gear tooth portion 37 and normalized, and the crack growth rate is represented by a log-log graph when the vertical axis represents the crack growth rate and the horizontal axis represents a value (ΔK/E) obtained by dividing the stress intensity factor range ΔK by the Young's modulus E of the resin material, if the fatigue crack growth rate da/dN (mm/cycle) calculated by the relational expression in the range of ΔK/E < 7×10⁻⁴ [√m] is equal to or less than a value A calculated by the following formula (3), the relationship between ΔK/E and the fatigue crack growth rate da/dN is obtained with a higher correlation.
[Math. 9] $A = 6.00 \times {10}^{22} \times {\left(ΔK/E\right)}^{8.30}$

Note that ΔK can be calculated in the same manner as in the formula (2) of Embodiment 1. In addition, the Young's modulus E can be calculated by the compliance method described in Embodiment 1, and can be measured by a least squares method by measuring, based on the following formula (4), a compliance λ while changing a load. Note that V₀ in the formula (4) represents an opening displacement amount of the clip gauge.
[Math. 10] $\begin{matrix}\frac{{BEΔV}_{0}}{ΔP} = \left(1+\frac{X / W}{{α}_{0}}\right) {\left(\frac{1 + {α}_{0}}{1 - {α}_{0}}\right)}^{2} \\ \times \left(\begin{matrix}1.61369 + 12.6778 \left({α}_{0}\right) - 14.2311 {\left({α}_{0}\right)}^{2} - 16.6102 {\left({α}_{0}\right)}^{3} \\ + 35.0499 {\left({α}_{0}\right)}^{4} - 14.4943 {\left({α}_{0}\right)}^{5}\end{matrix}\right)\end{matrix}$
$λ = {ΔV}_{0} / ΔP$ $ΔV = {V}_{0 max} - {V}_{0 min}$ $ΔP = {P}_{max} - {P}_{min}$ ${α}_{0} = {a}_{n} / W$ $X / W = 0.25$
B: thickness of test piece (mm)
X: distance from load axis to measurement position of clip gate (mm)
W: width of test piece (mm)
aₙ: crack length before test (mm)
Pₘₐₓ: maximum load (N)
Pₘᵢₙ: minimum load (N)

Hereinafter, a resin gear according to Embodiment 2 will be described in more detail with reference to Test 2. A relationship between ΔK/E and the fatigue crack growth rate da/dN can be clearly described based on Test 2.

### [Test 2]

### 1. Measurement of Crack Growth Rate

### (Preparation of Test Piece Formed of Resin Material)

A resin composition obtained by mixing 75 mass% of polyamide 66 having a number average molecular weight Mn of 35,000 and 25 mass% of glass fibers having an average fiber diameter of 6 µm was prepared and molded by injection molding to prepare a test piece of Inventive Example 2 formed of the resin material.

A resin composition obtained by mixing 75 mass% of polyamide 66 having a number average molecular weight Mn of 26,000 and 25 mass% of glass fibers having an average fiber diameter of 6 µm was prepared, and a test piece of Comparative Example 2 formed of a resin material was prepared in the same manner as Inventive Example 2.

A resin composition ("KyronMAX (registered trademark) S-2220" manufactured by Mitsubishi Chemical Advanced Materials Corporation) obtained by mixing 80 mass% of polyamide 66 and 20 mass% of a carbon fiber was prepared, and a test piece of Comparative Example 3 formed of a resin material was prepared in the same manner as Inventive Example 2.

A resin composition ("Genester (registered trademark) G1300A" manufactured by KURARAY CO., LTD) obtained by mixing 70 mass% of polyamide 9T and 30 mass% of glass fiber was prepared, and a test piece of Comparative Example 4 formed of a resin material was prepared in the same manner as Inventive Example 2.

### (Measurement of Crack Growth Rate)

Test pieces having the same shape were prepared in the same manner as in Test 1, and a test was performed using an electromagnetic fatigue tester E of 10 kN manufactured by Instron. The crack length a was measured by a compliance method using a clip gauge (model 2670-130) manufactured by Instron. Specific loads were a maximum load (Pₘₐₓ) of 360 N and a minimum load (Pₘᵢₙ) of 36 N, and each test piece was measured three times, and a calculated average value thereof was defined as the Young's modulus E.

Test conditions were as follows.
Frequency: 10 Hz, sine wave
Stress ratio (R): 0.1
Load range (ΔP): constant
Temperature: room temperature
Inventive Example 2: maximum load (Pₘₐₓ) of 450 N, minimum load (Pₘᵢₙ) of 45 N
Comparative Example 2: maximum load (Pₘₐₓ) of 400 N, minimum load (Pₘᵢₙ) of 40 N
Comparative Example 3: maximum load (Pₘₐₓ) of 650 N, minimum load (Pₘᵢₙ): 65 N
Comparative Example 4: maximum load (Pₘₐₓ) of 360 N, minimum load (Pₘᵢₙ): 36 N

The reason why load conditions were different among Inventive Example 2, Comparative Example 2, Comparative Example 3, and Comparative Example 4 is that in the test pieces of Inventive Example 2, Comparative Example 2, and Comparative Example 3, the crack did not grow under load conditions the same as the load condition of Comparative Example 4.

The relationship between the stress intensity factor range ΔK and the load range is expressed by the formula (2) of Embodiment 1.

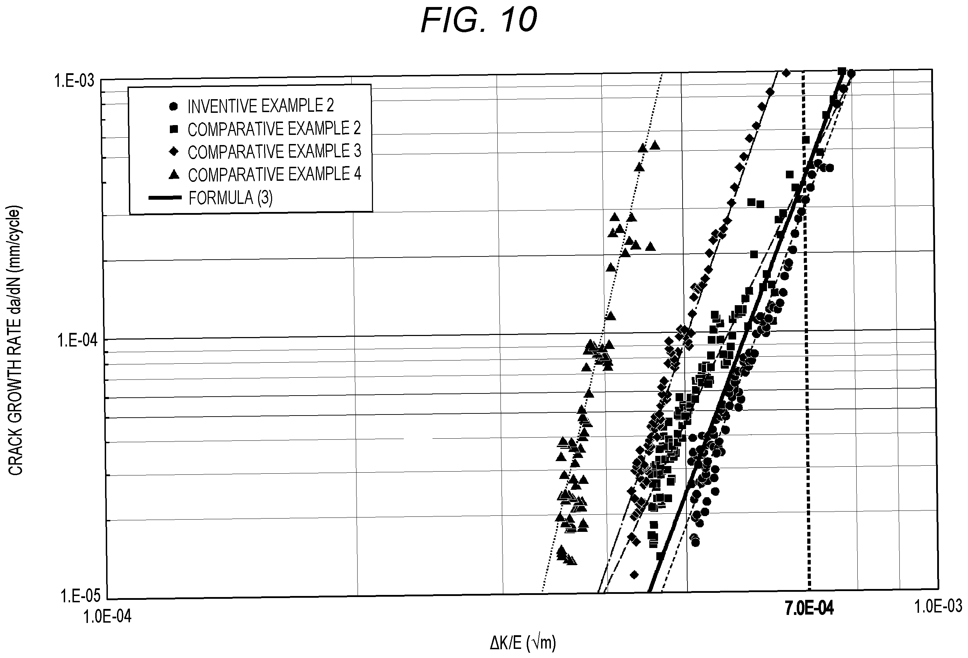

Measurement results are illustrated in FIG. 10. FIG. 10 is a diagram illustrating results of Test 2, and is a graph illustrating measurement results of the crack growth rate when the vertical axis represents the crack growth rate and the horizontal axis represents a value (ΔK/E) obtained by dividing the stress intensity factor range ΔK by the Young's modulus E of a resin material, and the measurement result of the crack growth rate was represented by a log-log graph. In FIG. 10, the crack growth rate of the material is as follows from a straight line portion of each graph.
Inventive Example 2: da/dN = 6.49 × 10²² × (ΔK/E)^{8.35} [mm/cycle]
Comparative Example 2: da/dN = 1.31 × 10¹⁷ × (ΔK/E)^{6.50} [mm/cycle]
Comparative Example 3: da/dN = 2.90 × 10²⁵ × (ΔK/E)^{8.94} [mm/cycle]
Comparative Example 4: da/dN = 1.94 × 10⁴⁰ × (ΔK/E)^{13.03} [mm/cycle]

As described above, it is understood that the resin material shown in Inventive Example 2 has a lower value of the crack growth rate in any ΔK/E with respect to Comparative Example 2, Comparative Example 3, and Comparative Example 4 in the range of ΔK/E < 7×10⁻⁴ [√m].

The formula (3) defined in the present invention is indicated by a thick solid line in FIG. 10. In FIG. 10, the value A obtained by the formula (3) is shown in the vertical axis.
[Math. 11] $A = 6.00 \times {10}^{22} \times {\left(ΔK/E\right)}^{8.30}$

### 2. Ball-on-disk Wear Test

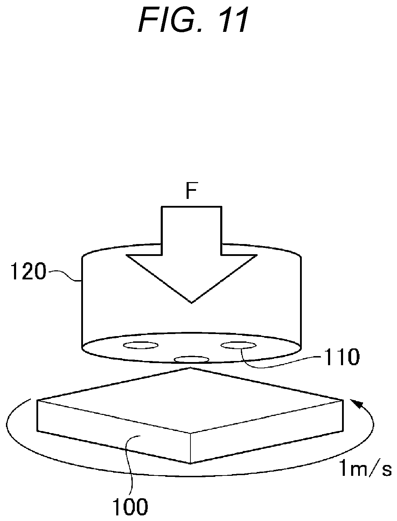

Using each of the resin materials of Inventive Example 2, Comparative Example 2, Comparative Example 3, and Comparative Example 4, the plate material illustrated in FIG. 4 was prepared and divided into four equal parts, and then a surface of a cut sample was cut with a lathe to perform a ball-on-disk wear test. FIG. 11 is a schematic view illustrating a device configuration for performing the ball-on-disk wear test. As illustrated in FIG. 11, a jig 120 in which three 1/4 inch balls 110 made of carbon steel were equally arranged was placed on a surface of a sample 100, and the jig 120 was caused to rotate continuously at a circumferential speed of 1 m/s in a state in which a load (F) of 40 N was applied. In addition, lubrication was performed between the sample 100 and the balls 110 with grease.

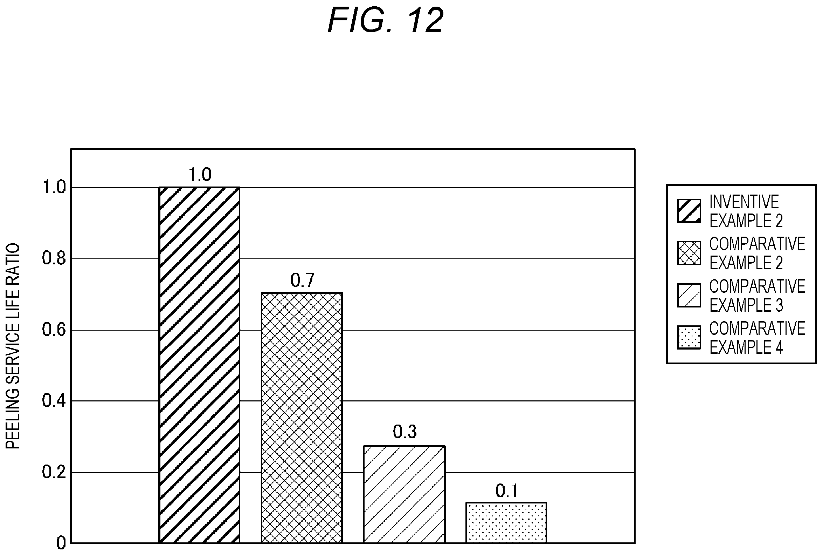

Then, occurrence of pitting was detected using a vibrometer (not illustrated), the test was stopped at the time when the pitting occurred, and times until the pitting occurred were compared. The test was performed seven times for each sample, and times until the pitting occurred were averaged. Test results are illustrated in FIG. 12, and a "pitting service life ratio" of the vertical axis is shown as a ratio of each sample of Comparative Examples 2 to 4 when the time until the test is stopped of Inventive Example 2 is 1.

As illustrated in FIG. 12, the "pitting service life ratio" is, with respect to Inventive Example 2, about 0.7 times in Comparative Example 2, about 0.3 times in Comparative Example 3, and about 0.1 times in Comparative Example 4, and it is understood that the pitting is prevented by applying a material having a low crack growth rate, and the durability is improved when the material is applied to a resin gear.

### 3. Durability Test of Worm Wheel

Regarding a result of a durability test for comparing the worm wheel formed of the resin composition of Inventive Example 2 and the worm wheel formed of the resin composition of Comparative Example 2, as described below, the resin composition of Inventive Example 2 and the resin composition of Comparative Example 2 in [Test 2] are the same as the resin composition of Inventive Example 1 and the resin composition of Comparative Example 1 in [Test 1], respectively, and the result is the same as that of the durability test for comparing the worm wheel formed of the resin composition of Inventive Example 1 and the worm wheel formed of the resin composition of Comparative Example 1, so that in the results of FIG. 9 in [Test 1], "Inventive Example 1" and "Comparative Example 1" were read as "Inventive Example 2" and "Comparative Example 2", respectively.

### ·Resin Compositions of Inventive Examples 1 and 2

The resin compositions obtained by mixing the polyamide 66 having a number average molecular weight Mn of 35,000 and the glass fibers having an average fiber diameter of 6 µm

### ·Resin Compositions of Comparative Examples 1 and 2

The resin compositions obtained by mixing the polyamide 66 having a number average molecular weight Mn of 26,000 and the glass fibers having an average fiber diameter of 6 µm

Although the embodiment and the variation thereof are described above with reference to the drawings, it is needless to mention that the present invention is not limited to these examples. It is apparent for those skilled in the art to which the present invention belongs that various modified examples or corrected examples are conceivable within the scope recited in the claims, and it is understood that the above falls within the technical scope of the present invention. In addition, the components described in the above embodiments may be combined in any manner without departing from the spirit of the invention.

The present application is based on a Japanese patent application (JP2023-184860) filed on October 27, 2023 and a Japanese patent application (JP2024-179219) filed on October 11, 2024, and contents thereof are incorporated herein by reference.

### REFERENCE SIGNS LIST

10: electric power steering device
11: steering shaft
11a: upper shaft
11b: lower shaft
13: electric motor
30: reduction gear mechanism
31: worm gear
31a, 31b: worm shaft
32: worm wheel
33: core member
37: gear tooth portion
37a: gear teeth

## Claims

1. A resin gear having a tooth portion formed of a resin material, wherein
in a case where a fatigue crack growth rate da/dN of the resin material is measured in accordance with ASTM E647, and the crack growth rate is represented by a log-log graph when a vertical axis represents the crack growth rate, and a horizontal axis represents a value (ΔK/E) obtained by dividing a stress intensity factor range ΔK by a Young's modulus E of the resin material,
in a range of ΔK/E < 7×10⁻⁴ [√m], the fatigue crack growth rate da/dN (mm/cycle) calculated by the relational expression is equal to or less than a value A calculated by the following formula (3),
[Math. 1] $A = 6.00 \times {10}^{22} \times {\left(ΔK/E\right)}^{8.30}$
in the formula (3), ΔK represents a value calculated by the following formula (2), and α, ΔP, B, W, a, N, Pₘₐₓ, and Pₘᵢₙ are as follows,
[Math. 2] $ΔK = \frac{ΔP}{B \sqrt{w}} \times \frac{\left(2+α\right)}{{\left(1+α\right)}^{\frac{3}{2}}} \times \left(0.886+4.64α-13.32{α}^{2}+14.72{α}^{3}-5.6{α}^{4}\right)$ $α = a / W$ $ΔP = {P}_{max} - {P}_{min}$
B: thickness of test piece (mm)
W: width of test piece (mm)
a: crack length (mm)
Pₘₐₓ: maximum load (N)
Pₘᵢₙ: minimum load (N)
N: number of repetitions (cycles).

2. The resin gear according to claim 1, wherein
the resin gear is used as a worm wheel of a steering device.

3. The resin gear according to claim 1 or 2, wherein
a base material of the resin material is polyamide 66, and
a number average molecular weight of the polyamide 66 is 30,000 or more and 60,000 or less.

4. The resin gear according to claim 3, wherein
the resin material contains glass fibers, and
an average fiber diameter of the glass fibers is 6 µm or more and 8 µm or less.
